# EUROPÄISCHE PATENTSCHRIFT

(11) **EP 0 559 035 B1**
(45) Veröffentlichungstag und Bekanntmachung des Hinweises auf die Patenterteilung: **04.10.1995**
(21) Anmeldenummer: 93102704.9
(22) Anmeldetag: 20.02.1993
(51) Int. Cl.: H05B 3/86, H05B 3/06, B60S 1/02

(54) **Lötverbindung zwischen einer auf einer Glasscheibe eingebrannten Leitmetallschicht und einem Stromanschlusselement**
Solder connection between an electrical conductor fired to a glass sheet and a current supply connector
Connexion soudée entre une couche électriquement conductrice cuite sur un vitrage et une borne d'amenée de courant

(30) Priorität: 29.02.1992 DE 4206365
(43) Veröffentlichungstag der Anmeldung: 08.09.1993
(73) Patentinhaber: SAINT GOBAIN VITRAGE INTERNATIONAL, 92400 Courbevoie (FR); VEGLA Vereinigte Glaswerke GmbH, D-52066 Aachen (DE)
(72) Erfinder: Gillner, Manfred, W-5100 Aachen (DE); Pikhard, Siegfried, W-5106 Roetgen (DE); Müller, Karl-Heinz, W-5100 Aachen (DE)
(74) Vertreter: Biermann, Wilhelm, Dr.-Ing.

(56) Entgegenhaltungen:
- DE-U- 9 016 664
- US-A- 2 644 066
- US-A- 2 709 211
- US-A- 3 553 833
- PATENT ABSTRACTS OF JAPAN vol. 11, no. 124 (C-416)17. April 1987

## Beschreibung

Die Erfindung betrifft ein Verfahren zum Herstellen einer Lötverbindung zwischen einer auf einer Glasscheibe aufgedruckten und eingebrannten Leitmetallschicht und dem ebenen Blechabschnitt eines Stromanschlußelements, insbesondere bei einer elektrisch beheizbaren Autoglasscheibe mit aufgedruckten und eingebrannten Heizleitern. Die Erfindung betrifft ferner eine elektrisch beheizbare Verbundglasscheibe, bei der die Heizleiter und die Stromanschlußflächen aus einer auf der an der thermoplastischen Zwischenschicht anliegenden Oberfläche einer der beiden Einzelglasscheiben aufgedruckten und eingebrannten Leitmetallschicht bestehen, und mit den Stromanschlußflächen die ebenen Blechabschnitte von metallischen Stromanschlußelementen verlötet sind.

Glasscheiben, insbesondere Autoglasscheiben, können für verschiedene Zwecke mit aufgedruckten und eingebrannten Leitmetallschichten versehen sein. Beispielsweise können Leitmetallschichten in Form schmaler Leiterstreifen auf der Glasoberfläche angeordnet sein, die als Heizleiter dienen. Elektrisch beheizbare Autoscheiben dieser Art, bei denen zwischen der Leitmetallschicht und dem ebenen Blechabschnitt eines Stromanschlußelements eine Lötverbindung hergestellt wird, sowie Verfahren zum Herstellen der Lötverbindung, sind aus der US-PS 3.553.833 bekannt. Ferner können solche Leitmetallschichten auch als Antennenleiter oder in Form von Sammelschienen als Zuleitungen zu den Heizleitern dienen oder die Funktion von Zuleitungen zu anderen elektrischen Verbrauchern haben.

Die Anforderungen, die an die Lötverbindung zwischen dem metallischen Stromanschlußelement und der eingebrannten Leitmetallschicht gestellt werden, können je nach dem Verwendungszweck der Glasscheibe unterschiedlich sein. Bei manchen Ausführungen werden z.B. verhältnismäßig hohe Anforderungen an die mechanische Abreißfestigkeit gestellt. Beispielsweise kann es erforderlich sein, eine Lötverbindung zwischen einem Stromanschlußelement und einer eingebrannten Leitsilberschicht herzustellen, die bei einem Kraftangriff senkrecht zur Glasoberfläche eine Abreißfestigkeit von wenigstens 196.1N (20 kp) aufweist. Abreißfestigkeiten in dieser Höhe werden bei den üblichen Lötverbindungen nicht mit der nötigen Sicherheit und Wiederholbarkeit erreicht, wie sie für eine wirtschaftliche Fertigung solcher Glasscheiben notwendig ist. Bei einer ungenügenden Abreißfestigkeit werden im Belastungsfall Teile der eingebrannten Leitsilberschicht und Teile des Glases aus der Glasscheibe herausgerissen.

Aus der US-PS 2.644.066 ist es bekannt, zur Vermeidung von beim Lötvorgang in die Glasscheibe induzierten Zugspannungen, und damit zur Verbesserung der Festigkeit der Lötverbindung zwischen einem Stromanschlußelement und der auf einer Glasscheibe angeordneten Leitmetallschicht zunächst eine Scheibe aus einem Metall mit dem gleichen Wärmeausdehungskoeffizienten wie dem des Glases auf die Leitmetallschicht aufzulöten, und auf diese Scheibe das Stromanschlußelement aufzulöten. Auf diese Weise entstehen beim Lötvorgang keine Spannungen, die zu einer Schädigung des Glases und damit zu einer Schwächung der Lötverbindung führen können. Die Scheiben bestehen jedoch aus speziellen Metallegierungen, die schwer zu beschaffen sind.

Der Erfindung liegt die Aufgabe zugrunde, ein Verfahren zum Herstellen einer Lötverbindung zwischen einem metallischen Stromanschlußelement und einer auf der Oberfläche einer Glasscheibe eingebrannten Leitschicht bereitzustellen, das ebenfalls Schädigungen des Glases beim Lötvorgang vermeidet und damit auch hohen Anforderungen bezüglich der Abreißfestigkeit des Anschlußelements genügt, das jedoch andererseits mit gängigen Mitteln durchgeführt werden kann.

Das erfindungsgemäße Verfahren besteht darin, daß zunächst ein Abschnitt einer 0,03 bis 0,08 mm dicken Folie aus einem Metall, wie z.B. Kupfer, mit der eingebrannten Leitschicht verlötet wird, und anschließend der ebene Blechabschnitt des Stromanschlußelements mit der Oberseite des Metallfolienabschnitts verlötet wird.

Durch die Auswahl des Materials für den Metallfolienabschnitt und infolge der geringen Dicke der Metallfolie werden beim Lötvorgang keine schädlichen Zugspannungen auf das Glas übertragen, weil die Spannungen unter den gegebenen Bedingungen zu einer plastischen Verformung der Metallfolie führen und auf diese Weise abgebaut werden, bevor sie eine Größe erreichen, die zu einer Schädigung des Glases führen kann. Metallfolien der hier benötigten Art sind andererseits handelsüblich und leicht zu beschaffen.

Durch die erfindungsgemäße Verwendung einer sehr dünnen Metallfolie bei der zweistufigen Verlötung wird außerdem die Glasoberfläche weniger stark erhitzt als bei Verwendung einer dickeren Metallscheibe, denn zum Auflöten einer dünnen Folie aus einem sehr gut wärmeleitenden Metall braucht nur eine wesentlich geringere Wärmemenge auf die Metallfolie aufgebracht zu werden. Durch eine derart dosierte Anwendung von Wärme gelingt es, die Temperatur in der Grenzschicht Leitsilber-Glas verhältnismäßig niedrig zu halten und so einerseits Zerstörungen der Leitsilberschicht durch zu hohe Temperaturen und andererseits das Entstehen schädlicher Spannungen zu vermeiden. Beim Auflöten des Stromanschlußelements in der zweiten Stufe des Lötvorgangs muß zwar mehr Wärme angewendet werden, um das Stromanschlußelement und insbesondere dessen ebenen Blechabschnitt mit Hilfe des Lötkolbens auf die erforderliche Temperatur zu erwärmen, doch besteht zu diesem Zeitpunkt durch die bereits mit der Leitsilberschicht verlötete dünne Metallfolie eine mit dem Glas flächig verbundene gut wärmeleitende Schicht, die infolge ihrer guten Wärmeleitfähigkeit und ihres bereits vorhandenen innigen Kontakts mit der Glasoberfläche diese in sehr gleichmäßiger Weise erwärmt und so die Entstehung von Temperaturgradienten im Glas weitgehend verhindert.

Zweckmäßigerweise wird bei der Durchführung des erfindungsgemäßen Verfahrens so vorgegangen, daß die Leitsilberschicht an der Lötstelle zunächst mit einer etwa 20 Mikrometer dicken Weichlotschicht mit Hilfe eines eine möglichst niedrige Temperatur aufweisenden Lötkolbens vorbeschichtet wird. Sodann wird über diese Weichlotschicht ein Abschnitt einer etwa 50 Mikrometer dicken verzinnten Kupferfolie mit der eingebrannten Leitsilberschicht verlötet. Durch die geringe Masse der Kupferfolie ist eine schnelle Erwärmung der Folie gewährleistet. Außerdem sorgt die gute Wärmeleitfähigkeit der Kupferfolie für eine schnelle und gleichmäßige Verteilung der über den Lötkolben eingeleiteten Wärmeenergie. Dadurch wird dieser Lötvorgang zeitlich verkürzt und die Temperaturbelastung für die empfindliche Grenzschicht Glas-Leitsilberschicht auf ein Minimum reduziert. Um dann anschließend das Stromanschlußelement, das eine wesentlich höhere Masse als die Kupferfolie aufweist, auf eine lötfähige Temperatur zu bringen, muß es vergleichsweise lange mit dem Lötkolben in Kontakt stehen. Durch den dann bereits vorhandenen metallischen Schichtunterbau wird aber eine gleichmäßige und deshalb unkritische Temperaturverteilung in der Glasoberfläche bzw. in der Grenzschicht Glas-Leitmetallschicht erreicht.

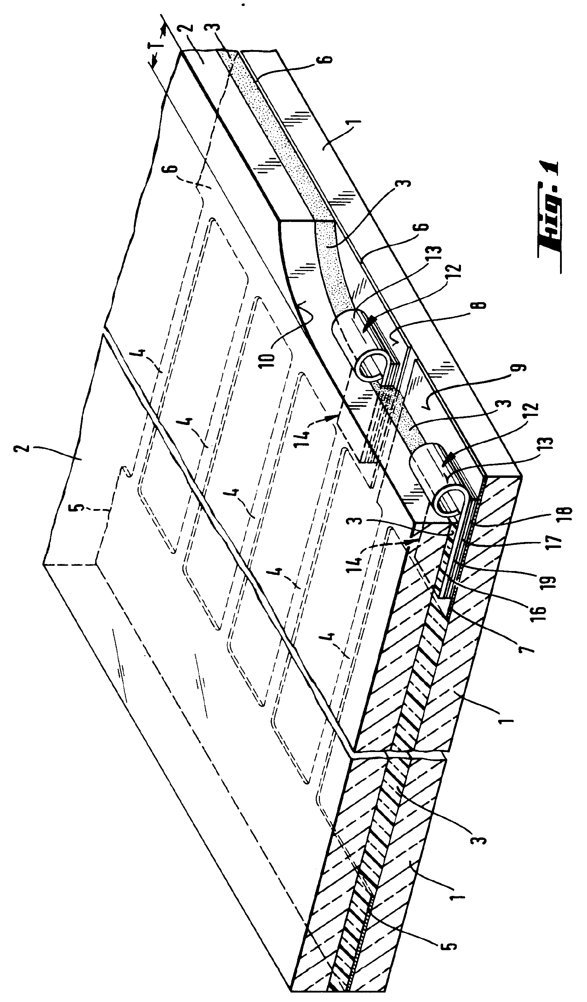

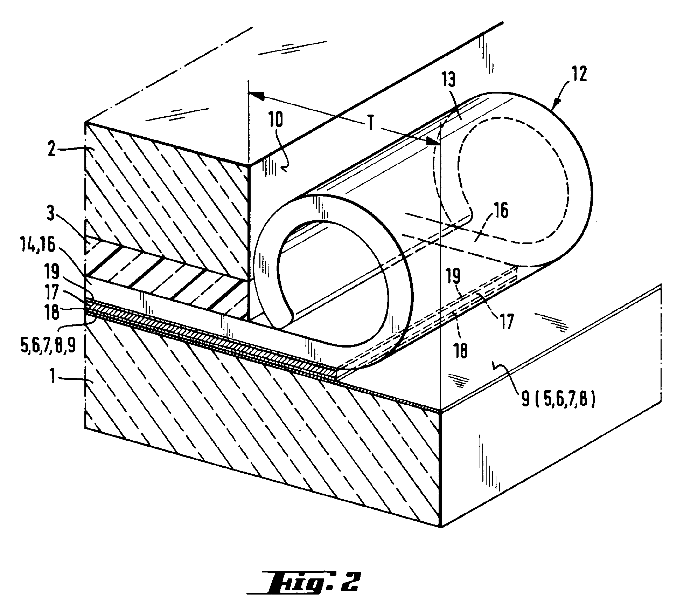

Die Erfindung wird anhand der Zeichnung näher erläutert, in der eine elektrisch beheizbare Verbundglasscheibe ausschnittsweise im Bereich der Stromanschlußelemente dargestellt ist.

Die Verbundglasscheibe umfaßt eine Glasscheibe 1 und eine Glasscheibe 2, die über eine thermoplastische Zwischenschicht 3, üblicherweise aus Pulyvinylbutyral bestehend, zur Verbundglasscheibe verbunden sind. Auf der der thermoplastischen Zwischenschicht 3 zugekehrten Oberfläche der Glasscheibe 1 ist eine aus Heizleitern 4, einer sich über die gesamte Breite der Glasscheibe erstreckenden Sammelschiene 5 und zwei sich jeweils über die halbe Breite der Glasscheibe erstreckenden Sammelschienen 6 und 7 bestehende Leitsilberschicht aufgedruckt. Durch diese Anordnung sind zwei Heizfelder hintereinandergeschaltet. Die benachbarten Enden der Sammelschienen 6 und 7 dienen als Stromanschlußflächen 8 und 9. Die aus einer druckfähigen Einbrennfarbe bestehende Leitsilberschicht wird mittels Siebdrucktechnik aufgedruckt und eingebrannt.

Die Stromanschlußelemente 12 bestehen aus an einem Ende zu Kabelanschlußhülsen 13 aufgerollten Blechabschnitten 14. Die der mit der Leitsilberschicht versehene Glasscheibe 1 gegenüberliegende Glasscheibe 2 weist eine Randausnehmung 10 auf, in deren Bereich die Kabelanschlußhülsen 13 liegen. Zwischen den eingebrannten Stromanschlußflächen 8,9 der Leitsilberschicht und den ebenen Abschnitten 16 der Stromanschlußelemente 12 sind jeweils etwa 50 Mikrometer dicke Metallfolien 17 aus beidseitig verzinnter Kupferfolie zwischengeschaltet, die einerseits über Lötschichten 18 mit den Stromanschlußflächen 8,9 und andererseits über Lötschichten 19 mit den ebenen Blechabschnitten 16 der Stromanschlußelemente 12 verbunden sind. Die ebenen Blechabschnitte 16 stützen sich über die thermoplastische Zwischenschicht 3 gegen die innere Oberfläche der Glasscheibe 2 ab.

Die Tiefe T der Randausnehmung 10 wird so gewählt, daß die Kabelanschlußhülsen 13 nicht über die Umfangsfläche der Verbundglasscheibe hinausragen und vollständig in der von der Randausnehmung 10 gebildeten Hohlkehle liegen. Somit wird die Möglichkeit einer Verletzung der Stromanschlußelemente 12 bei Manipulieren der Verbundglasscheibe vermieden. Die Stromanschlußelemente 12 bestehen beispielsweise aus 0,2 mm dickem und 5 mm breitem verzinnten Messingblech.

Bei der Herstellung einer beheizbaren Verbundglasscheibe der beschriebenen Art wird wie folgt vorgegangen:

Mittels Siebdruck wird auf die äußere Glasscheibe 1 eine Leitsilberschicht aus Heizleitern 4 und Sammelschienen 5,6 und 7 mit den Stromanschlußflächen 8 und 9 aufgebracht. Die dazu verwendete Leitsilberpaste wird nach ihrer Trocknung bei Temperaturen von etwa 600 Grad Celsius eingebrannt. Die Dicke der eingebrannten Leitsilberschicht beträgt etwa 20 Mikrometer.

Anschließend erfolgt nach dem Auftragen eines Weichlotes das Anlöten der dünnen Metallfolien 17 auf den Stromanschlußflächen 8,9 über die Lötschichten 18, die eine Dicke von ebenfalls etwa 20 Mikrometern aufweisen. Auf die Metallfolien 17 werden nun die ebenen Blechabschnitte 16 der Stromanschlußelemente 12 über etwa 30 Mikrometer dicke Lötschichten 19 angelötet. Bei diesem Lötvorgang bewirken nunmehr die Metallfolien 17 eine flächige und gleichmäßige Temperaturverteilung in der Glasoberfläche. Außerdem wird ein direkter Kontakt des Lötkolbens mit den Stromanschlußflächen umgangen.

In üblicher Weise werden schließlich die thermoplastische Zwischenschicht 3 und darauf die äußere Glasscheibe 2 mit der Randausnehmung 10 aufgelegt und miteinander verbunden. Die Kabelanschlußhülsen 13 liegen dabei innerhalb der durch die Randausnehmung 10 gebildeten Hohlkehle; die thermoplastische Zwischenschicht besitzt ebenfalls eine analoge Randausnehmung.

Auf diese Weise erhält man eine erfindungsgemäße Verbundglasscheibe mit den bereits beschriebenen Vorteilen. Beispielsweise sind damit Abreißfestigkeiten in allen Richtungen von größer 196.1N (20 kp) erreichbar.

## Patentansprüche

1. Verfahren zum Herstellen einer Lötverbindung zwischen einer auf einer Glasscheibe (2) aufgedruckten und eingebrannten Leitmetallschicht (8,9) und dem ebenen Blechabschnitt (16) eines Stromanschlußelements (12), insbesondere bei einer elektrisch beheizbaren Autoglasscheibe mit aufgedruckten und eingebrannten Heizleitern (4), **dadurch gekennzeichnet**, daß zunächst ein Abschnitt einer 0,03 bis 0,08 mm dicken Folie (17) aus einem Metall, wie z.B. Kupfer, mit der eingebrannten Leitmetallschicht (8,9) verlötet wird, und anschließend der ebene Blechabschnitt (16) des Stromanschlußelements (12) mit der Oberseite des Metallfolienabschnitts (17) verlötet wird.

2. Verfahren nach Anspruch 1, dadurch gekennzeichnet, daß die Dicke des ebenen Blechabschnitts des Stromanschlußelements 0,1 bis 0,4 mm beträgt.

3. Elektrisch beheizbare Verbundglasscheibe, bei der die Heizleiter (4) und die Stromanschlußflächen aus einer auf der an der thermoplastischen Zwischenschicht anliegenden Oberfläche einer der beiden Einzelglasscheiben aufgedruckten und eingebrannten Leitmetallschicht (8,9) bestehen und mit den Stromanschlußflächen die ebenen Blechabschnitte (16) von metallischen Stromanschlußelementen (12) verlötet sind, dadurch gekennzeichnet, daß die Stromanschlußelemente (12) jeweils aus einem am Ende zu einer Kabelanschlußhülse (13) aufgerollten Blechabschnitt (14) bestehen, daß die der mit der Leitmetallschicht (5,6,7,8,9) versehenen Glasscheibe (1) gegenüberliegende Glasscheibe (2) im Bereich der Stromanschlußelemente (12) eine Randausnehmung (10) aufweist, in deren Bereich die Kabelanschlußhülsen (13) liegen, und daß der ebene Blechabschnitt (16) der Stromanschlußelemente (12) jeweils mit einem Abschnitt (17) einer 0,03 bis 0,08 mm dicken Folie aus einem Metall, wie z.B. Kupfer, verlötet, und dieser Folienabschnitt (17) jeweils mit den Stromanschlußflächen (8,9) der Leitmetallschicht verlötet ist.

## Claims

1. Method of producing a solder connection between a conductive metal layer (8, 9) printed and annealed on a glass pane (2) and the flat sheet metal portion (16) of a current terminal element (12), particularly in an electrically heatable automobile glass pane with printed and annealed heat conductors (4), characterised thereby that initially a portion of a foil (17) of metal, such as for example copper, of 0.03 to 0.08 millimetres thickness is soldered to the annealed conductive metal layer (8, 9), and subsequently the flat sheet metal portion (16) of the current terminal element (12) is soldered to the upper side of the metal foil portion (17).

2. Method according to claim 1, characterised thereby that the thickness of the flat sheet metal portion of the current terminal element amounts to 0.1 to 0.4 millimetres.

3. Electrically heatable compound glass pane, in which the heat conductors (4) and the current terminal surfaces consist of a conductive metal layer (8, 9) printed and annealed on the surface, which contacts the thermoplastic intermediate layer, of one of the two individual glass panes and the flat sheet metal portions (16) of metallic current terminal elements (12) are soldered to the current terminal surfaces, characterised thereby that the current terminal elements (12) each consist of a sheet metal portion (4) rolled up at the end into a cable connector sleeve (13), that the glass pane (2) opposite the glass pane (1) provided with the conductive metal layer (5, 6, 7, 8, 9) has an edge recess (10) in the region of the current terminal elements (12), in the region of which recess lie the cable connector sleeves (13), and that the flat sheet metal portion (16) of the current terminal elements (12) is soldered each time to a portion (17) of a foil of metal, such as for example copper, of 0.03 to 0.08 millimetres thickness, and this foil portion (17) is soldered each time to the current terminal surfaces (8, 9) of the conductive metal layer.

## Revendications

1. Procédé pour former une connexion soudée entre une couche métallique conductrice (8, 9) imprimée sur un vitrage (2) dans lequel elle est noyée par cuisson et la section de feuillard plane (16) d'une borne d'amenée de courant (12), en particulier pour un vitrage d'automobile pouvant être chauffé à l'électricité comprenant des conducteurs chauffants (4) imprimés et noyés par cuisson, caractérisé en ce qu'une section d'un feuillard (17) d'une épaisseur de 0,03 à 0,08 mm fait d'un métal tel que le cuivre par exemple, est d'abord soudée à la couche métallique conductrice noyée par cuisson (8, 9) et la section de feuillard plane (16) de la borne d'amenée de courant (12) est ensuite soudée sur la face supérieure de la section de feuillard métallique (17).

2. Procédé suivant la revendication 1, caractérisé en ce que l'épaisseur de la section de feuillard plane de la borne d'amenée de courant est de 0,1 à 0,4 mm.

3. Vitrage feuilleté pouvant être chauffé à l'électricité, dans lequel les conducteurs chauffants (4) et les surfaces d'amenée de courant consistent en une couche métallique conductrice (8, 9) imprimée sur la surface contiguë à la couche thermoplastique intermédiaire de l'une des deux feuilles de verre distinctes et noyée par cuisson dans cette surface et sont soudés aux surfaces d'amenée de courant des sections de feuillard planes (16) de bornes d'amenée de courant (12), caractérisé en ce que les bornes d'amenée de courant (12) consistent chacune en une section de feuillard (14) enroulée à une extrémité en une douille de raccordement de câble (13), que la feuille de verre (2) opposée à la feuille de verre (1) munie de la couche métallique conductrice (5, 6, 7, 8, 9) présente dans la région des bornes d'amenée de courant (12) un évidement marginal (10) dans la région duquel sont situées les douilles de raccordement de câble (13) et que la section de feuillard plane (16) des bornes d'amenée de courant (12) est chaque fois soudée à une section (17) d'un feuillard d'une épaisseur de 0,03 à 0,08 mm fait d'un métal tel que le cuivre par exemple, et cette section de feuillard (17) est chaque fois soudée aux surfaces d'amenée de courant (8, 9) de la couche métallique conductrice.
